# EUROPÄISCHE PATENTSCHRIFT

(11) **EP 1 891 853 B1**
(45) Veröffentlichungstag und Bekanntmachung des Hinweises auf die Patenterteilung: **24.07.2013**
(21) Anmeldenummer: 07016038.7
(22) Anmeldetag: 16.08.2007
(51) Int. Cl.: A01G 3/025

(54) **Handhaltbares Arbeitsgerät, insbesondere Astschneider**
Handheld tool, in particular branch cutter
Appareil de travail pouvant être tenu à la main, en particulier dispositif de découpe de branches

(30) Priorität: 22.08.2006 DE 102006039218
(43) Veröffentlichungstag der Anmeldung: 27.02.2008
(73) Patentinhaber: HUSQVARNA AB, 561 82 Huskvarna (SE)
(72) Erfinder: Reichart, Vincent, 89075 Ulm (DE); Brobeil, Achim, 89160 Dornstadt (DE)
(74) Vertreter: Finkele, Rolf

(56) Entgegenhaltungen:
- EP-A- 0 895 712
- DE-A1- 3 925 752
- DE-A1-102005 039 084
- DE-C- 949 784

## Beschreibung

Die Erfindung betrifft ein handhaltbares Arbeitsgerät mit einem Arbeitskopf, welcher relativ zu einem Grundkörper verschiedene Schwenkstellungen um eine Schwenkachse einnehmen kann.

Aus DE 949 784 C ist ein Arbeitsgerät gemäß dem Oberbegriff von Anspruch 1 bekannt.

Aus der EP 895 712 B1 ist ebenfalls ein handbetätigter Astschneider gemäß dem Oberbegriff bekannt, bei welchem ein Schneidkopf mittels einer Schraubverbindung in verschiedenen Schwenkstellungen um eine Schwenkachse arretierbar ist.

Der vorliegenden Erfindung liegt die Aufgabe zugrunde, die Handhabung eines handhaltbaren Arbeitsgeräts mit einem relativ zu einem Grundkörper um eine Schwenkachse schwenkbaren und in verschiedenen Schwenkstellungen festlegbaren Arbeitskopf zu verbessern.

Die Erfindung ist im Patentanspruch 1 beschrieben. Die abhängigen Ansprüche enthalten vorteilhafte Ausgestaltungen und Weiterbildungen der Erfindung.

Wesentlicher Vorteil bei dem erfindungsgemäßen Arbeitsgerät ist, dass durch die Wirkung der Betätigungskraft im Zugelement in Richtung der Eingriffsstellung, zwischen Haltestrukturen und Gegenstrukturen die eingenommene Schwenkstellung gefestigt und bei Wegfall oder Nachlassen der Betätigungskraft gelockert wird. Die Haltestrukturen und Gegenhaltestrukturen sind im Gebrauchszustand des Arbeitsgeräts zwischen einer Eingriffsstellung und einer Lösestellung relativ zueinander verschiebbar, wogegen bei den eingangs genannten Arbeitsgeräten der arretierende Eingriff durch Lösen einer Schraubverbindung aufgehoben wird, so dass kein Gebrauchszustand des Geräts gegeben ist, und vor Gebrauch des Arbeitsgeräts durch Anziehen der Schraubverbindung der Eingriff wieder fest hergestellt wird.

Durch die Verschwenkbarkeit im Gebrauchszustand wird bei dem erfindungsgemäßen Arbeitsgerät in einem Ausgangszustand ohne das Vorliegen einer Betätigungskraft eine Änderung der Schwenkstellung ermöglicht und durch Einwirkung der Betätigungskraft werden die Haltestrukturen und Gegenstrukturen in die Eingriffsstellung gedrängt und die Eingriffsstellung hergestellt oder vorzugsweise gefestigt, so dass die eingenommene Schwenkstellung nicht mehr oder vorzugsweise nur mit höherem Drehmoment um die Schwenkachse verändert werden kann.

Vorteilhafterweise enthalten die ineinander eingreifenden Haltestrukturen und Gegenstrukturen Verzahnungen mit in Richtung der Schwenkbewegung schräg verlaufenden Zahnflanken, insbesondere nach Art einer sogenannten Hirth-Verzahnung, welche vorteilhafterweise auch bei Einwirkung der Betätigungskraft die Funktion einer Überlastkupplung bei höheren Drehmomenten zwischen Arbeitskopf und Grundkörper um die Drehachse übernehmen können, so dass die Gefahr der Beschädigung des Arbeitsgeräts verringert ist.

Vorzugsweise sind die Verzahnungen mit den schrägen Flanken in einer Ruhestellung des Arbeitsgeräts auch ohne das Vorliegen einer Betätigungskraft in Eingriff und sind dabei vorteilhafterweise durch eine Anfangshaltekraft in die Eingriffsstellung gedrängt. Die Anfangshaltekraft ist mit geringem Drehmoment zwischen Arbeitskopf und Grundkörper um die Schwenkachse überwindbar, so dass der Arbeitskopf manuell leicht zwischen durch die Verzahnungen vorgegebenen Schwenkstellungen verschwenkbar ist.

Insbesondere kann bei einem Astschneider mit einem langgestreckten, insbesondere rohrförmigen Abschnitt des Grundkörpers als Verlängerung zwischen der Betätigungseinrichtung und dem Schneidkopf des Astschneiders der Schneidkopf von dem Benutzer auch auf den durch die Verlängerung große Distanz problemlos durch Anlage an einen Ast und leichten seitlichem Druck in eine für den beabsichtigten Schnitt günstige Schwenkstellung um die Schwenkachse gebracht werden, welche sich mit Ausüben der Betätigungskraft nicht mehr oder nur bei wesentlich höheren Drehmomenten um die Schwenkachse verändern kann.

Neben der bevorzugten Ausführung des Arbeitsgeräts als Astschneider ist die Erfindung auch in anderen Anwendungen als handhaltbares Arbeitsgerät einsetzbar, wo eine Arbeitseinrichtung in einem von einer Betätigungseinrichtung beabstandeten und über ein Zugelement betätigbaren und um eine Schenkachse in verschiedene Arbeitsstellungen schwenkbaren Arbeitskopf angeordnet ist, beispielsweise in einer Greifzange, einem Pflücker usw. als Arbeitsgerät.

Die Erfindung ist nachfolgend anhand eines bevorzugten Ausführungsbeispiels unter Bezugnahme auf die Abbildungen nach eingehend veranschaulicht. Dabei zeigt:
- Fig. 1: einen handbetätigbaren Astschneider,
- Fig. 2: einen teilweise geöffneten Schneidkopf,
- Fig. 3: den Schneidkopf nach Fig. 2 mit aufgeschnittenem Schwenkgelenk.

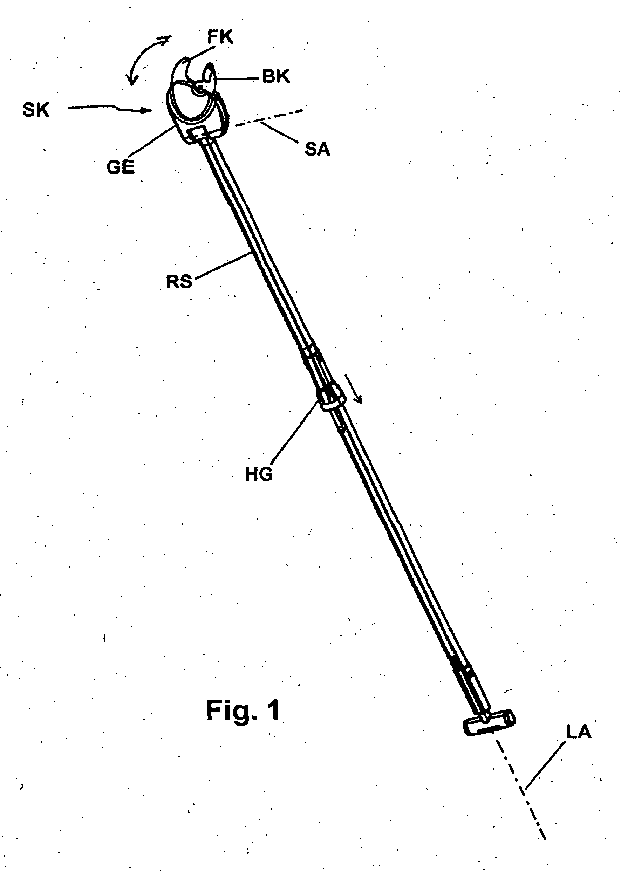

In Fig. 1 ist eine vorteilhafte Ausführung eines handhaltbaren Astschneiders dargestellt, welcher in an sich bekannter Weise einen Grundkörper mit einem langgestreckten Schaft RS, vorzugsweise in Form eines Rohres oder eines Hohlprofils, und einen am unteren Ende auf Benutzerseite entlang des Schaftes verschiebbaren Handgriff HG als Betätigungseinrichtung enthält. Am oberen Ende des Schaftes ist ein Schneidkopf SK angeordnet, welcher eine gebräuchliche Scherenklingenanordnung BK, FK als Arbeitseinrichtung enthält. Der Schneidkopf SK ist mit dem Schaft RS des Grundkörpers über ein Schwenkgelenk verbunden, dessen Schwenkachse SA quer zur Längsachse LA des Schafts verläuft. Der Schneidkopf SK ist um die Schwenkachse SA über einen begrenzten Schwenkwinkel von vorteilhafterweise wenigstens 90°, insbesondere wenigstens 150° verschwenkbar und in mehreren verschiedenen Schwenkstellungen zum Schneiden von Ästen einsetzbar. Eine Verschiebung des Handgriffs HG entlang des Schafts wird durch ein im Inneren des Rohrs geführtes Zugelement durch das Gelenk in eine Schneidbewegung der Klingenanordnung umgesetzt. Derartige Astschneider sind an sich bekannt.

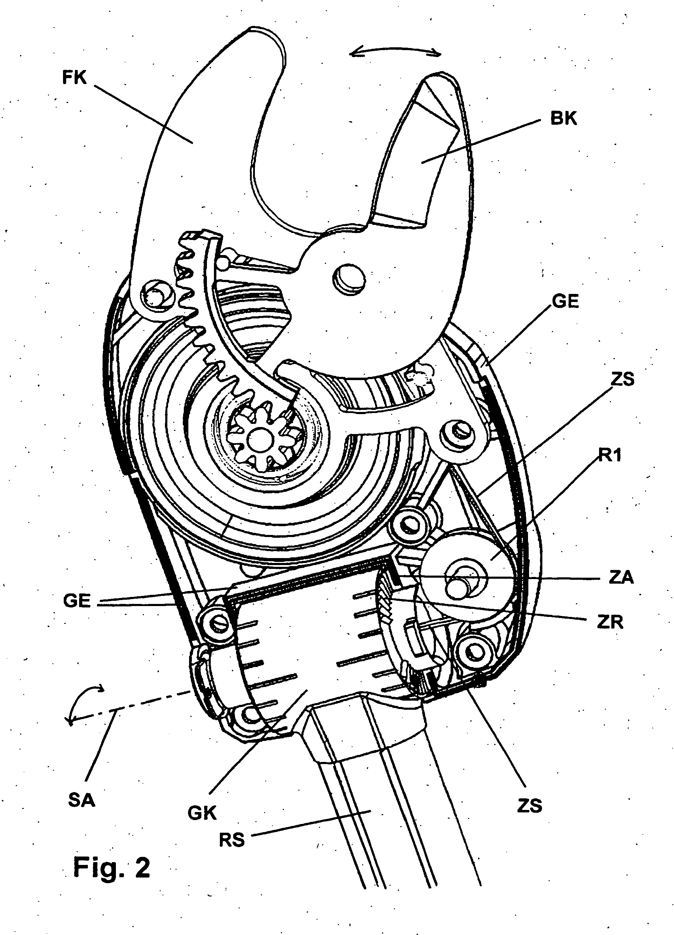

In Fig. 2 ist in vergrößerter Darstellung das obere Ende des Schaftes RS, das Schwenkgelenk und der Schneidkopf dargestellt, wobei eine von zwei Halbschalen eines Schneidkopf-Gehäuses GE entfernt ist, um erfindungswesentliche Teile der dargestellten Ausführung zu veranschaulichen.

In dem Gehäuse GE des Schneidkopfes ist eine Schneideinrichtung mit einer feststehenden Klinge FK und einer beweglichen Klinge BK angeordnet, wobei die bewegliche Klinge mit einem Zahnbogen gekoppelt ist, der in ein drehbares Ritzel eingreift. Das Ritzel ist drehfest mit einer Seilscheibe SS verbunden, auf welcher ein Zugseil ZS auf- und abwickelbar ist. Die Seilscheibe nimmt unter der Einwirkung einer Feder, insbesondere einer Spiralfeder, eine Ruhestellung ein, welche der in Fig. 1 und Fig. 2 skizzierten geöffneten Stellung der Schneideinrichtung entspricht. Durch Einwirkung einer Betätigungskraft auf das Zugseil ZS wird dieses unter Drehung der Seilscheibe SS von der Seilscheibe abgewickelt und die Drehung der Seilscheibe SS wird über das Ritzel und den Zahnbogen umgesetzt in eine Schließbewegung der beweglichen Schneide BK in Richtung der festen Schneide FK.

Das Gehäuse GE des Schneidkopfes ist über ein Schwenkgelenk mit einem Gelenkkörper GK um eine Schwenkachse SA schwenkbar. Der Gelenkkörper GK ist beispielsweise mit axialen Fortsätzen in dem Gehäuse GE gelagert.

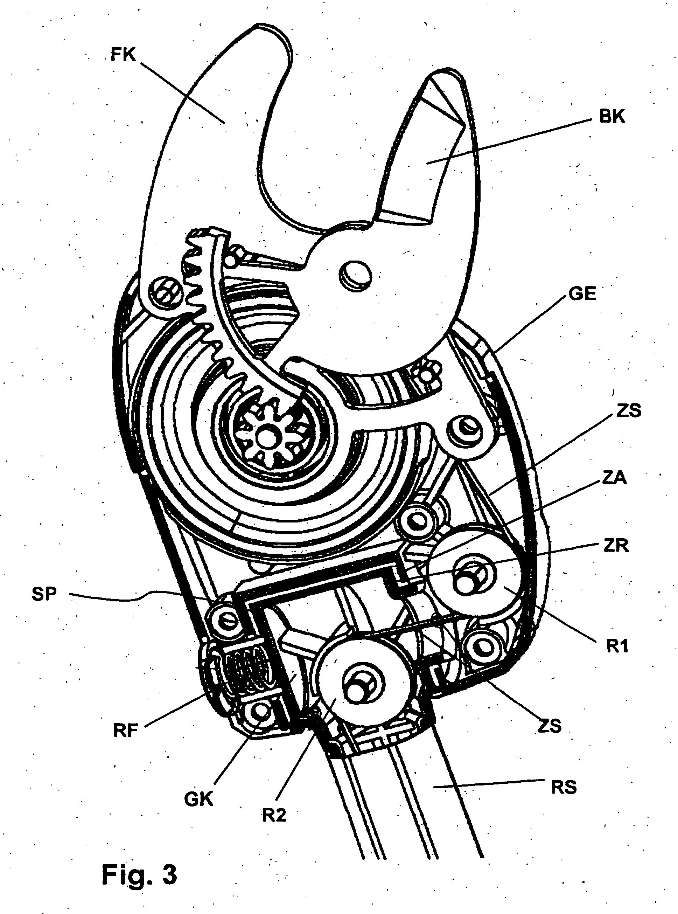

In Fig. 3 ist der Gelenkkörper aufgeschnitten gezeichnet, um weitere Details zu veranschaulichen.

Das Zugseil ist von der Seilscheibe SS wegführend über eine erste Rolle R1 umgelenkt zu einer zweiten Rolle R2 und nach Umlenkung an dieser in den hohlen Schaft R2 zu der beabstandeten Betätigungseinrichtung geleitet. Das Zugseil verläuft zwischen der Rolle R1 und R2 im wesentlichen auf der Schwenkachse SA, so dass eine durch das Zugseil übertragene Betätigungskraft zwischen den Rollen R1 und R2 nur in axialer Richtung wirkt. Die Rolle R1 ist in einem bezüglich des Gehäuses GE des Schneidkopfes festen Lager gelagert, das Lager der zweiten Rolle ist bezüglich des Gelenkkörpers GK feststehend. Die Führung des Zugseils in dem Abschnitt zwischen der ersten und der zweiten Rolle hat ferner den Effekt, dass bei einer Schwenkung des Gelenkkopfes um die Schwenkachse keine Verlängerung oder Verkürzung des Seiles eintritt und andererseits.eine durch das Zugseil übertragene Betätigungskraft auch kein Drehmoment zwischen Gelenkkopf und Schaft um die Schwenkachse bewirkt.

Der relativ zum Gehäuse GE des Schneidkopfes um die Schwenkachse SA schwenkbar gelagerte Gelenkkörper ist zusätzlich um ein geringes Maß in axialer Richtung relativ zum Gehäuse GE des Gelenkkörpers verschiebbar. In Fig. 2 ist am linken Lager des Gelenkkörpers im Gehäuse ein Spalt SP zwischen Gelenkkörper und einer Aufnahme im Gehäuse erkennbar. Die axiale Verschiebbarkeit des Gelenkkörpers im Gehäuse ist durch die Größe dieses Spaltes begrenzt. Die in Fig. 2 und Fig. 3 skizzierte axiale Position des Gelenkkörpers relativ zum Gehäuse des Schneidkopfes sei als Ausgangsstellung bezeichnet, in Welcher der Gelenkkopf unter der Einwirkung einer Ausgangshaltekraft innerhalb seiner axialen Beweglichkeit nach rechts gedrückt ist, so dass der Spalt SP frei ist und der Gelenkkopf mit einer dem Spalt axial entgegen gesetzt liegenden Anlagefläche an einer Gegenfläche der Gelenkaufnahme in dem Gehäuse GE anliegt. An der Anlagefläche des Gelenkkörpers ist eine Haltestruktur und an der Gegenfläche auf Seiten des Gehäuses GE eine Gegenstruktur ausgebildet, welche bei Anlage beider Flächen aneinander formschlüssig ineinander greifen und eine Verschwenkung des Gelenkkopfes GE relativ zum Schaft um die Schwenkachse SA verhindern. Die Haltestruktur und Gegenstruktur sind wie skizziert vorteilhafterweise nach Art einer sogenannten Hirth-Verzahnung, d. h. einer axial wirksamen, stirnseitigen Verzahnung ausgebildet. Die Verzahnungen weisen schräge Zahnflanken auf, welche sowohl gegen die Umfangsrichtung einer Verdrehung um die Schwenkachse SA als auch gegen die Richtung der Schwenkachse SA geneigt sind. Hierdurch ergibt sich die Möglichkeit, dass bei Ausübung eines Drehmoments auf den Schneidkopf um die Schwenkachse aufgrund des schrägen Verlaufs der Zahnflanken eine der Haltekraft entgegen gerichtete axiale Kraft entsteht und bei hinreichend großem Drehmoment die Verzahnungen axial auseinander gedrückt werden können. Die Größe des erforderlichen Drehmoments ist neben der Geometrie der Verzahnungen abhängig von der Größe der Haltekraft.

Eine anfängliche Haltekraft ohne Ausübung einer Betätigungskraft auf das Zugseil kann beispielsweise durch eine Vorspannung des Zugseils aufgebracht sein, welche zwischen den beiden Rollen den Seilabschnitt verkürzend und damit die Haltestruktur und die Gegenstruktur aufeinander zu drückend wirkt. In bevorzugter Ausführung ist eine anfängliche Haltekraft ohne Einwirken einer Betätigungskraft über das Zugseil aufgebracht durch eine Feder, welche zwischen Gehäuse GE des Schneidkopfes und Gelenkkörper GK des Grundkörpers am Ende des Schaftes RS axial in die Richtung wirkt, dass durch die Federkraft die Verzahnungen ineinander gedrückt werden. In Fig. 3 ist hierfür eine Spirat-Druckfeder RF auf der der ersten Rolle R1 abgewandten Seite des Gelenkkörpers GK vorgesehen.

Die Federkraft der Feder RF kann so gewählt werden, dass einerseits der Schneidkopf allein durch seine eigene Gewichtskraft und/oder bei freien Bewegungen des Arbeitsgeräts nicht aus einer eingenommenen SchWenkstellung weiter bewegt wird, dass aber andererseits eine manuelle Verschwenkung des Schneidkopfes um die Schwenkachse ohne größeren Aufwand möglich ist, insbesondere auch in Arbeitsposition des Geräts mit von dem Schneidkopf durch den langgestreckten Schaft beabstandeten Benutzer eine Verschwenkung um die Schwenkachse bei Anlegen des Schneidkopfes an einen Ast oder dergleichen und seitlichen Druck über den Schaft eine Veränderung der Schwenkstellung möglich ist. Hierbei wird jeweils der Gelenkkopf relativ zum Gehäuse des Schneidkopfes entlang der Zahnflanken der Verzahnungen.axial verschoben, wobei sich die Länge des Seilabschnittes zwischen den Rollen R1 und R2 um die Tiefe der Verzahnung vergrößert, bis die Zahnspitzen übereinander hinweggleiten können und in die nächste durch die Zahnstrukturen definierte Schwenkstellung gleiten. Typischerweise kann mit dem bekannten Ratschengeräusch eine Verschwenkung über mehrere benachbarte Schwenkstellungen in einem Zuge durchgeführt werden.

Hat der Benutzer eine ihm passende Schwenkstellung des Schneidkopfes relativ zum Schaft um die Schwenkachse auf diese Art eingestellt und die offene Schneide an einen zu schneidenden Ast angelegt, erzeugt der Benutzer über die Betätigungseinrichtung eine Betätigungskraft auf das Zugseil, welches ein Abwickeln des Zugseils von der Seilscheibe und ein Schließen der Schneideinrichtung bewirkt.

Eine erfindungswesentliche zusätzliche Wirkung bei Durchführung des Schneidvorgangs ist, dass durch die über das Zugseil ZS übertragene Betätigungskraft, welche auch in dem Seilabschnitt zwischen den Rollen R1 und R2 wirksam ist, die beiden Rollen R1 und R2 und wegen derer fester Lagerung auch Gelenkkopf GH und Gehäuse GE des Schneidkopfes in Richtung der Schwenkachse unter Verstärkung der Haltekraft in den Zahnstrukturen gegeneinander gedrückt werden. Die Betätigungskraft ist in der Regel wesentlich höher als die durch die Feder RF aufgebrachte anfängliche Haltekraft und die Haltekraft während des Schneidvorgangs ist daher vorteilhafterweise während des Schneidvorgangs durch die Betätigungskraft gegeben. Hierdurch ist gewährleistet, dass während des Schneidvorgangs sich die vom Benutzer gewählte Schwenkstellung und Position am Ast nicht ungewollt verändert, was auch unter dem Gesichtspunkt wichtig ist, dass durch eine hohe Betätigungskraft häufig die Gefahr einer solchen Verschiebung besteht.

Andererseits ist durch die skizzierte Art der ineinander greifenden Verzahnungen mit den schrägen Flanken weiter gewährleistet, dass gegebenenfalls auftretende größere Drehmomente auf den Schneidkopf um die Schwenkachse nicht zu einer Zerstörung des Gelenks führen, sondern vor einer solchen Zerstörung eine weitere Verschwenkung stattfinden kann. Nach Wegfall der Betätigungskraft wird die Seilscheibe SS unter der Einwirkung ihrer Rückholfeder wieder zurück gedreht und wickelt ein Stück des Zugseils an ihrem Umfang auf, wobei sich die Schneiden der Schneideinrichtung wieder in die geöffnete Stellung zurück bewegen und im Gelenk wieder die reduzierte Haltekraft der Feder RF und gegebenenfalls einer leichten Vorspannung im Zugseil wirkt.

Die Erfindung ist nicht auf die beschriebenen Ausführungsbeispiele beschränkt, sondern im Rahmen fachmännischen Könnens in mancherlei Weise abwandelbar. Insbesondere ist die Erfindung nicht auf Anordnungen beschränkt, bei welchen die Schwenkachse quer zur Längsachse eines Schaftes verläuft. Es ist auch keine mehrfache Umlenkung des Zugseils erforderlich. Anstelle des Zugseils kann auch ein anderes Zugelement benutzt sein. Die ineinander greifenden Verzahnungen sind nicht notwendig als axial wirkende stirnseitige Verzahnungen ausgeführt. Die Erfindung ist auch in anderen Arbeitsgeräten als dem detailliert beschriebenen Astschneider vorteilhaft verwendbar, beispielsweise in Greifern oder Pflückern.

## Patentansprüche

1. Handhaltbares Arbeitsgerät mit einem Arbeitskopf, welcher relativ zu einem Grundkörper in einem Schwenkgelenk um eine Schwenkstellung in verschiedene Schwenkstellungen verlagerbar und über lösbar ineinandergreifende Haltestrukturen auf Seiten des Arbeitskopfes und Gegenstrukturen auf Seiten des Grundkörpers in verschiedenen Schwenkstellungen festlegbar ist, mit einem Zugelement zwischen einer Betätigungseinrichtung auf Seiten des Grundkörpers und einer Arbeitseinrichtung auf Seiten des Arbeitskopfes, wobei das Zugelement mit einem im wesentlichen zur Schwenkachse parallelen Abschnitt über das Schwenkgelenk geführt ist und eine Betätigungskraft zwischen Betätigungseinrichtung und Arbeitseinrichtung überträgt, **dadurch gekennzeichnet, dass** die Haltestrukturen und Gegenhaltestrukturen zwischen einer Eingriffsstellung mit festgelegter Schwenkstellung und einer eine Veränderung der Schwenkstellung ermöglichenden Lösestellung relativ zueinander verschiebbar sind und dass die Betätigungskraft in Richtung der Eingriffsstellung zwischen Haltestrukturen und Gegenstrukturen wirkt.

2. Arbeitsgerät nach Anspruch 1, **dadurch gekennzeichnet, dass** eine von der Betätigungskraft unabängige anfängliche Haltekraft zwischen Haltestrukturen und Gegenhaltestrukturen in Richtung der Eingriffsstellung wirkt.

3. Arbeitsgerät nach Anspruch 2, **dadurch gekennzeichnet, dass** die anfängliche Haltekraft wenigstens teilweise durch eine Vorspannung des Zugelements in einer Ruhestellung gegeben ist.

4. Arbeitsgerät nach Anspruch 2 oder 3, **dadurch gekennzeichnet, dass** die anfängliche Haltekraft wenigstens teilweise durch eine von dem Zugelement unabhängige Federkraft gegeben ist.

5. Arbeitsgerät nach einem der Ansprüche 1 bis 4, **dadurch gekennzeichnet, dass** das Zugelement ein flexibles Zugmittel ist.

6. Arbeitsgerät nach einem der Ansprüche 1 bis 5, **dadurch gekennzeichnet, dass** die Richtung der Verschiebbarkeit von Haltestrukturen und Gegenhaltestrukturen zwischen der Eingriffsstellung und der Lösestellung im wesentlichen parallel zur Schwenkachse Verläuft.

7. Arbeitsgerät nach Anspruch 5 und 6, **dadurch gekennzeichnet, dass** das Zugmittel im Verlauf von der Betätigungsrichtung zur Arbeitseinrichtung vor und/oder nach dem Schwenkgelenk umgelenkt gegen die Schwenkachse verläuft.

8. Arbeitsgerät nach einem der Ansprüche 1 bis 7, dadurch gekenntzeichnet, dass die Schwenkachse quer zur einer Verbindungslinie zwischen Betätigungseinrichtung und Arbeitskopf verläuft.

9. Arbeitsgerät nach einem der Ansprüche 1 bis 8, **dadurch gekennzeichnet, dass** der Grundkörper zwischen Betätigungseinrichtung und Schwenkgelenk langgestreckt, insbesondere rohrförmig ausgebildet ist.

10. Arbeitsgerät nach einem der Ansprüche 1 bis 9, **dadurch gekennzeichnet, dass** zwischen Arbeitskopf und Grundkörper eine Überlastkupplung bezüglich Drehmomenten um die Schwenkachse vorgesehen ist.

11. Arbeitsgerät nach einem der Ansprüche 1 bis 10, **dadurch gekennzeichnet, dass** die Haltestrukturen und Gegenstrukturen lösbar ineinandergreifende Verzahnungen enthalten.

12. Arbeitsgerät nach Anspruch 11, **dadurch gekennzeichnet, dass** die Verzahnungen schräge Zahnflanken aufweisen, insbesondere eine Hirth-Verzahnung bilden.

13. Arbeitsgerät nach einem der Ansprüche 1 bis 2, **dadurch gekennzeichnete** das der Arbeitskopf eine Schneideinrichtung als Arbeitseinrichtung enthält.

14. Arbeitsgerät nach Anspruch 13, **dadurch gekennzeichnet, dass** die Schwenkachse parallel zur Schneidebene der Schneideinrichtung liegt.

15. Arbeitsgerät nach Anspruch 13 oder 14, **dadurch gekennzeichnet, dass** es sich um einen Astschneider handelt.

## Claims

1. A hand-held work device with a working head that can be moved relative to a base body in a pivot articulation about a pivoting position into different pivoting positions and can be fixed via detachably intermeshing holding structures on the sides of the working head and counterstructures on the sides of the base body into different pivoting positions, with a traction element between an actuating device on the sides of the base body and with a working device on the sides of the working head, whereby the traction element is guided with a section that is substantially parallel to the pivot axis by the pivot articulation and transmits an actuating force between the actuating device and the work device, **characterized in that** the holding structures and counter-holding structures can shift relative to each other between an engaged position with fixed pivoting position and a release position that makes possible a changing of the pivoting position, and that the actuating force acts in the direction of the engaged position between holding structures and counter-structures.

2. The working device according to claim 1, **characterized in that** an initial holding force that is independent of the actuating force acts between the holding structures and the counter-holding structures in the direction of the engaged position.

3. The working device according to claim 2, **characterized in that** the initial holding force is given at least partially by a pretensioning of the traction element in a rest position.

4. The working device according to claim 2 or 3, **characterized in that** the initial holding force is given at least partially by a spring force independent of the traction element.

5. The working device according to one of claims 1 to 4, **characterized in that** the traction element is a flexible traction means.

6. The working device according to one of claims 1 to 5, **characterized in that** the direction of the ability of the holding structures and counter-holding structures to shift between the engagement position and the release position runs substantially parallel to the pivot axis.

7. The working device according to claims 5 and 6, **characterized in that** the traction means runs deflected toward the pivot axis in the course from the actuating device to the working device before and/or after the pivot articulation.

8. The working device according to one of claims 1 to 7, **characterized in that** the pivot axis runs transversely to a connection line between the actuating device and the working head.

9. The working device according to one of claims 1 to 8, **characterized in that** the base body between the actuating device and the pivot articulation is constructed in a longitudinally extended, in particular tubular manner.

10. The working device according to one of claims 1 to 9, **characterized in that** an overlord coupling relative to torques about the pivot axis is provided between the working head and the base body.

11. The working device according to one of claims 1 to 10, **characterized in that** the holding structures and the counter-structures contain coggings that can mesh into one another in a detachable manner.

12. The working device according to claim 11, **characterized in that** the coggings have oblique tooth flanks, in particular a serration.

13. The working device according to one of claims 1 to 12, **characterized in that** the working head comprises a cutting device as working device.

14. The working device according to claim 13, **characterized in that** the pivot axis is parallel to the cutting plane of the cutting device.

15. The working device according to claim 13 or 14, **characterized in that** it concerns a branch cutter.

## Revendications

1. Appareil de travail pouvant être tenu à la main, comportant une tête de travail, laquelle peut passer par différentes positions de pivotement par rapport à un corps de base dans une articulation pivotante autour d'une position de pivotement, et peut être fixée dans différentes positions de pivotement par le biais de structures de retenue situées du côté de la tête de travail et de structures antagonistes situées du côté du corps de base qui s'emboîtent entre elles de manière amovible, et comportant un élément de traction situé entre un dispositif d'actionnement du côté du corps de base et un dispositif de travail du côté de la tête de travail, l'élément de traction passant par l'articulation pivotante en étant guidé sur une section essentiellement parallèle à l'axe de pivotement et transmettant une force d'actionnement entre le dispositif d'actionnement et le dispositif de travail, **caractérisé en ce que** les structures de retenue et les structures antagonistes de retenue sont déplaçables l'une par rapport à l'autre entre une position d'engagement, qui présente une position de pivotement fixe, et une position de dégagement, qui permet une modification de la position de pivotement, et **en ce que** la force d'actionnement agit en direction de la position d'engagement entre les structures de retenue et les structures antagonistes.

2. Appareil de travail selon la revendication 1, **caractérisé en ce qu'**une force de retenue de départ indépendante de la force d'actionnement agit entre les structures de retenue et les structures antagonistes de retenue en direction de la position d'engagement.

3. Appareil de travail selon la revendication 2, **caractérisé en ce que** la force de retenue de départ est produite au moins partiellement par une précontrainte de l'élément de traction dans une position de repos.

4. Appareil de travail selon la revendication 2 ou 3, **caractérisé en ce que** la force de retenue de départ est produite au moins partiellement par une force résiliente indépendante de l'élément de traction.

5. Appareil de travail selon l'une des revendications 1 à 4, **caractérisé en ce que** l'élément de traction est un moyen de traction flexible.

6. Appareil de travail selon l'une des revendications 1 à 5, **caractérisé en ce que** la direction de déplacement des structures de retenue et des structures antagonistes de retenue entre la position d'engagement et la position de dégagement est pratiquement parallèle à l'axe de pivotement.

7. Appareil de travail selon la revendication 5 et 6, **caractérisé en ce que** le moyen de traction s'étend dans la direction d'actionnement vers le dispositif de travail en étant dévié avant et/ou après l'articulation pivotante contre l'axe de pivotement.

8. Appareil de travail selon l'une des revendications 1 à 7, **caractérisé en ce que** l'axe de pivotement est transversal à une ligne reliant le dispositif d'actionnement et la tête de travail.

9. Appareil de travail selon l'une des revendications 1 à 8, **caractérisé en ce que** le corps de base est réalisé entre le dispositif d'actionnement et l'articulation pivotante en présentant une forme allongée, notamment tubulaire.

10. Appareil de travail selon l'une des revendications 1 à 9, **caractérisé en ce qu'**il est prévu, entre la tête de travail et le corps de base, un accouplement de surcharge relatif aux couples autour de l'axe de pivotement.

11. Appareil de travail selon l'une des revendications 1 à 10, **caractérisé en ce que** les structures de retenue et les structures antagonistes comprennent des dentures qui s'emboîtent entre elles de manière amovible.

12. Appareil de travail selon la revendication 11, **caractérisé en ce que** les dentures présentent des flancs de dent obliques, et forment notamment une denture Hirth.

13. Appareil de travail selon l'une des revendications 1 à 12, **caractérisé en ce que** la tête de travail contient un dispositif de coupe servant de dispositif de travail.

14. Appareil de travail selon la revendication 13, **caractérisé en ce que** l'axe de pivotement est parallèle au plan de coupe du dispositif de coupe.

15. Appareil de travail selon la revendication 13 ou 14, **caractérisé en ce qu'**il s'agit d'un coupe-branches.
